# EUROPEAN PATENT APPLICATION

(11) **EP 4 683 053 A1**
(43) Date of publication of application: **21.01.2026**
(21) Application number: 25187584.5
(22) Date of filing: 04.07.2025
(51) Int. Cl.: H01M 50/105, H01M 50/178, H01M 50/184, H01M 50/186, H01M 50/188, H01M 50/528, H01M 50/533, H01M 50/536, H01M 50/55, H01M 50/553, H01M 50/566

(54) **SECONDARY BATTERY AND METHOD FOR MANUFACTURING THE SAME**

(30) Priority: 18.07.2024 KR 20240094990
(71) Applicant: SAMSUNG SDI CO., LTD., Yongin-si, Gyeonggi-do 17084 (KR)
(72) Inventor: PARK, Byung-Woo, 17084 Yongin-Si (KR)
(74) Representative: Maiwald GmbH

(57) **Abstract**

A secondary battery (100) includes an electrode assembly (110) comprising a first electrode, a separator, and a second electrode stacked therein, an electrode tab (120) protruding from one side of the electrode assembly (110), an electrode lead (130) connected to the electrode tab (120), and a pouch case (150) accommodating the electrode assembly (110), the pouch case (150) including a first cover and a second cover, wherein an adhesive film (140) is attached to a connection portion (135) between the electrode tab (120) and the electrode lead (130), and the adhesive film (140) is interposed between the first cover and the second cover.

## Description

### BACKGROUND

### 1. Field

Embodiments relate to a secondary battery and a method for manufacturing the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

Embodiments include a secondary battery, comprising an electrode assembly comprising a first electrode, a separator, and a second electrode stacked therein, an electrode tab protruding from one side of the electrode assembly, an electrode lead connected to the electrode tab, and a pouch case accommodating the electrode assembly, the pouch case including a first cover and a second cover wherein an adhesive film is attached to a connection portion between the electrode tab and the electrode lead, and the adhesive film is interposed between the first cover and the second cover.

The adhesive film may be along a sealing portion of the pouch case.

The electrode tab may include a first bent portion inside the pouch case, and the electrode tab may be bent into a U shape in the first bent portion.

The electrode tab may include a second bent portion inside the pouch case, and the electrode tab may be bent into an L shape in the second bent portion.

The second bent portion may be below the connection portion.

The adhesive film may be attached to opposite side surfaces of the connection portion.

The adhesive film may include polypropylene (PP).

The electrode tab and the electrode lead may be welded together.

One end of the electrode lead may be outside the pouch case.

A plane defined by the electrode lead is perpendicular to a stacking direction of the electrode assembly.

The electrode tab may include a first electrode tab protruding from the first electrode, and a second electrode tab protruding from the second electrode, wherein the electrode lead includes a first electrode lead connected to the first electrode tab and a second electrode lead connected to the second electrode tab.

The first electrode lead and the second electrode lead may be on a same surface of the pouch case.

Embodiments include a method for manufacturing a secondary battery, the method including forming an electrode assembly by stacking a first electrode, a separator, and a second electrode, connecting an electrode tab protruding from one side of the electrode assembly and an electrode lead, attaching an adhesive film to a connection portion between the electrode tab and the electrode lead, accommodating the electrode assembly in a pouch case, the pouch case including a first cover and a second cover, the adhesive film being between the first cover and the second cover.

The method may further include forming a first bent portion inside the pouch case by bending the electrode tab into a U shape.

The method may further include forming a second bent portion inside the pouch case by bending the electrode tab into an L shape.

The method may further include sealing the pouch case.

The adhesive film may include polypropylene (PP), and sealing the pouch case may include sealing the pouch case by interposing the adhesive film between the first cover and the second cover of the pouch case.

The adhesive film may be along a sealing portion of the pouch case.

Connecting the electrode tab protruding from one side of the electrode assembly and the electrode lead may include welding the electrode tab and the electrode lead together.

One end of the electrode lead may be outside the pouch case.

These and other aspects and features of the present disclosure will be described in or will be apparent from the following description of embodiments of the present disclosure.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.

Features will become apparent to those of ordinary skill in the art by describing in detail exemplary embodiments with reference to the attached drawings, in which:
FIG. 1 illustrates a schematic diagram showing a secondary battery according to one or more embodiments of the present disclosure;
FIG. 2 illustrates an exploded diagram showing a secondary battery according to one or more embodiments of the present disclosure;
FIG. 3 illustrates a cross-sectional view in a case where the electrode assembly is seen from the side according to one or more embodiments of the present disclosure;
FIG. 4 illustrates a plan view in a case where the electrode assembly is seen from above according to one or more embodiments of the present disclosure;
FIG. 5 illustrates a projection view of a terminal portion and surroundings thereof in the secondary battery according to one or more embodiments of the present disclosure;
FIG. 6 illustrates a flowchart showing an example of a method for manufacturing a secondary battery according to one or more embodiments of the present disclosure; and
FIGS. 7 and 8 illustrate an operation of bending an electrode tab in a method for manufacturing a secondary battery according to one or more embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her disclosure in the best way.

The embodiments described in this specification and the configurations shown in the drawings are only some of the embodiments of the present disclosure and do not represent all of the technical ideas, aspects, and features of the present disclosure.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

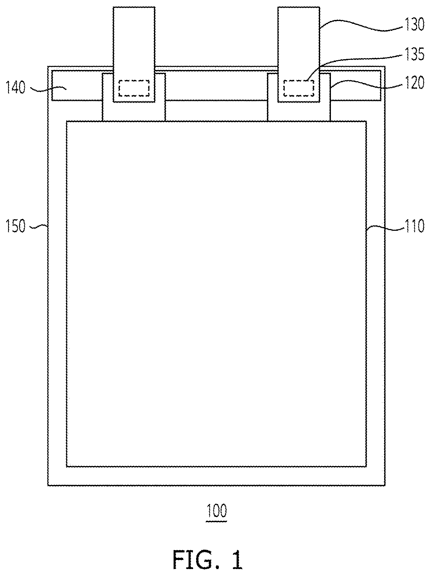

FIG. 1 illustrates a schematic diagram showing a secondary battery according to one or more embodiments of the present disclosure.

Referring to FIG. 1, a secondary battery 100 according to one or more embodiments of the present disclosure includes an electrode assembly 110 in which a first electrode, a separator, and a second electrode are stacked, an electrode tab 120 protruding from one side of the electrode assembly 110, an electrode lead 130 connected to the electrode tab 120, and a pouch case 150 accommodating the electrode assembly 110. An adhesive film 140 may be attached to cover a region corresponding to a connection portion 135 between the electrode tab 120 and the electrode lead 130. The secondary battery 100 may be a pouch-type secondary battery.

In the electrode assembly 110, the first electrode may be an electrode corresponding to a positive electrode or a negative electrode. The second electrode may be an electrode having an opposite polarity to the first electrode. For example, in a case where the first electrode is a positive electrode, the second electrode may be a negative electrode. Conversely, in a case where the first electrode is a negative electrode, the second electrode may be a positive electrode. In some embodiments, the first electrode, the second electrode, and the separator may be impregnated with an electrolyte.

The electrode assembly 110 may have a multilayer structure in which a plurality of first electrodes, separators, and second electrodes are stacked. For example, the electrode assembly 110 may have a structure in which a first electrode and a second electrode formed of a plurality of sheets are alternately stacked with a separator interposed therebetween. However, the first electrode and the second electrode may be formed in a wound structure with a separator, which is an insulator, interposed therebetween.

The separator may function to prevent a short circuit between the first electrode and the second electrode while allowing movement of lithium ions. The separator may be composed of, for example, a polyethylene (PE) film, a polypropylene (PP) film, a polyethylene-polypropylene film, etc.

The secondary battery 100 according to one or more embodiments of the present disclosure may include an electrode tab 120 formed to protrude outward from one side of the electrode assembly 110. For example, the electrode tab 120 may be formed to protrude from an uncoated portion of the first electrode or the second electrode where an active material layer is not provided to one side of the electrode assembly 110. The electrode tab 120 may perform the function of collecting current from the current collector of the first electrode or the second electrode and transferring the current to the electrode lead 130. For example, the electrode tab 120 may be formed as an extension of the electrode current collector included in the electrode assembly 110 and may allow current to flow smoothly from the inside to the outside of the secondary battery 100.

In one or more embodiments, the electrode tab 120 may be formed of a metal foil or a thin metal plate, such as copper, a copper alloy, nickel, or a nickel alloy. In some embodiments, the electrode tab 120 may be formed of a metal foil or a thin metal plate, such as aluminum or an aluminum alloy.

The secondary battery 100 according to one or more embodiments of the present disclosure may include the electrode lead 130 connected to the electrode tab 120. The electrode lead 130 may transmit the current transferred from the electrode tab 120 to the outside of the secondary battery 100. In one or more embodiments, the electrode lead 130 may function as a terminal of the secondary battery 100. In some embodiments, the electrode lead 130 may be connected to the terminal and used for electrical connection with an external circuit. For example, the external circuit may be electrically connected in contact with the electrode lead 130 provided on one side of the pouch case 150 while the electrode assembly 110 is accommodated in the pouch case 150. Therefore, in one or more embodiments, one end of the electrode lead 130 may be positioned outside the pouch case 150.

The electrode lead 130 may be connected to have the same electrical polarity as the electrode tab 120. For example, the electrode assembly 110 may include a negative electrode plate as the first electrode, a positive electrode plate as the second electrode, and a separator interposed therebetween. The negative electrode plate may include a negative electrode tab electrically connected to a negative electrode uncoated portion of the electrode tab 120, and the positive electrode plate may include a positive electrode tab electrically connected to a positive electrode uncoated portion of the electrode tab 120. The negative electrode tab and the positive electrode tab may be electrically connected to the outside by being welded to the negative electrode lead and the positive electrode lead of the electrode lead 130, respectively.

In one or more embodiments, the electrode lead 130 may be formed of a conductive metal such as an aluminum alloy, a metal including stainless steel (SUS), steel, a copper alloy, a titanium alloy, a magnesium alloy, or zinc-plated steel. However, the material of the electrode lead 130 may include various materials with excellent durability and conductivity depending on choice. For example, the electrode lead 130 may be nickel plated on a conductive metal surface to lower electrical contact resistance and increase resistance to corrosion.

According to one or more embodiments of the present disclosure, the electrode tab 120 and the electrode lead 130 may be connected by welding after coming into contact at the connection portion 135. For example, the electrode tab 120 and the electrode lead 130 may be welded using any one of ultrasonic welding, laser welding, resistance welding, tungsten inert gas welding (TIG welding), or a combination thereof. However, various methods commonly used for welding two materials may be used according to the choice of those skilled in the art.

The adhesive film 140 may be attached to cover a region corresponding to the connection portion 135. This is described below with reference to the accompanying drawings.

According to one or more embodiments, the adhesive film 140 may include a base layer and an adhesive layer. The base layer may form the basic structure of the adhesive film 140 and may include a polymer material or ceramic, such as polypropylene (PP), polyimide (PI), polyethylene terephthalate (PET), polyacrylonitrile (PAN), polyvinyl chloride (PVC), polytetrafluoroethylene (PTFE or Teflon), polyethylene (PE), or polyethylene oxide (PEO) to provide yield strength and flexibility, but the material may correspond to any one of appropriate compounds used as an insulating material in the art. The adhesive film 140 may include polypropylene (PP), which has excellent chemical resistance and resistance even in contact with electrolyte.

The adhesive layer may form a strong adhesion between the base layer and the pouch case 150. The adhesive layer of the adhesive film 140 may include a thermoplastic resin such as polyurethane (PU) or ethylene vinyl acetate (EVA), but the material may correspond to any one of the appropriate compounds used as an adhesive material in the art.

The adhesive film 140 may be joined to the pouch case by heating the adhesive layer of the adhesive film 140 through a heat sealing or ultrasonic sealing process. For example, in the heat sealing or ultrasonic sealing process performed on the pouch case, the chemical bond between the base layer of the adhesive film 140 and the pouch case 150 may be strengthened through a series of processes in which the adhesive layer of the adhesive film 140 is melted and then hardened.

The secondary battery 100 according to one or more embodiments of the present disclosure may include a lithium battery cell, a sodium battery cell, etc. However, the battery cell or the secondary battery 100 includes any battery that is capable of repeatedly providing electricity through charging and discharging. The secondary battery 100 according to one or more embodiments of the present disclosure may be applied to automobiles, mobile phones, and/or various types of electrical devices, etc.

According to some embodiments of the present disclosure, a secondary battery having a novel structure may be provided which has a low failure rate in a case of being connected to an electrode lead even for a secondary battery having a plurality of electrode tabs.

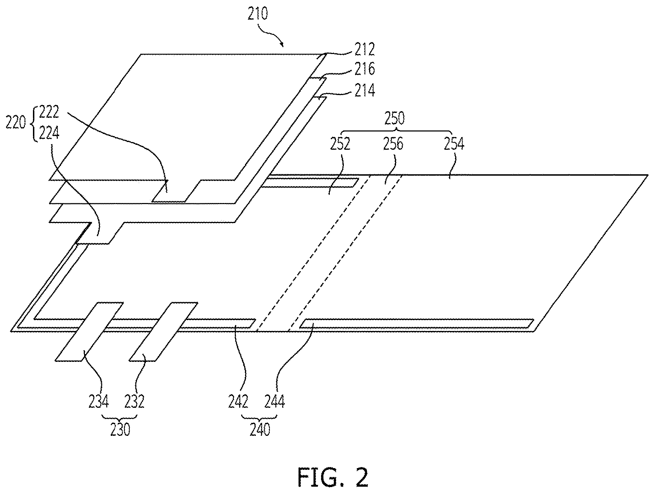

FIG. 2 illustrates an exploded diagram showing the secondary battery 200 according to one or more embodiments of the present disclosure.

Referring to FIG. 2, an electrode tab 220 of the secondary battery 200 according to one or more embodiments of the present disclosure may include a first electrode tab 222 protruding from a first electrode 212 and a second electrode tab 224 protruding from a second electrode 214, and an electrode lead 230 may include a first electrode lead 232 connected to the first electrode tab 222 and a second electrode lead 234 connected to the second electrode tab 224.

The first electrode 212 may include an electrode current collector plate formed of a metal foil such as copper, a copper alloy, nickel, or a nickel alloy. A first active material layer to which a first active material such as graphite or carbon is applied may be formed on the upper or lower surface of the first electrode 212, and a portion of the first uncoated portion, which is a region where the first active material is not applied, may function as the first electrode tab 222. The first electrode tab 222 may be a passage for current flow between the first electrode 212 and the first electrode lead 232 formed on one side of a pouch case 250.

In one or more embodiments, the first electrode tab 222 may be formed by cutting in advance so as to protrude from one side in a case of manufacturing the first electrode 212, and may be provided to protrude further than a separator 216 from one side without separate cutting or processing.

The second electrode 214 may include an electrode current collector plate formed of a metal foil such as aluminum or an aluminum alloy. A second active material layer to which a second active material such as a transition metal oxide is applied may be formed on the upper or lower surface of the second electrode 214, and a portion of the second uncoated portion, which is a region where the second active material is not applied, may function as the second electrode tab 224. The second electrode tab 224 may be a passage for current flow between the second electrode 214 and the second electrode lead 234 formed in the pouch case 250.

In one or more embodiments, the second electrode tab 224 may be formed by cutting in advance so as to protrude from the other side in a case of manufacturing the second electrode 214, and may be provided to protrude further than the separator 216 from one side without separate cutting or processing.

According to one or more embodiments, the first electrode lead 232 and the second electrode lead 234 may be disposed on the same surface of the pouch case 250. For example, the first electrode lead 232 and the second electrode lead 234 may be spaced apart from each other by a certain interval on the same surface of the pouch case 250. At this time, one end of the electrode lead 230 may be positioned outside the pouch case 250, and the opposite end may be positioned inside the pouch case 250.

Referring again to FIG. 2, an insulating coating material may be applied to the inner surface of the pouch case 250 to a certain thickness. For example, the inner surface of the pouch case 250 may be coated with an insulating polymer including polypropylene (PP), polyimide (PI), ethylene propylene rubber (EPDM), polyethylene terephthalate (PET), polycarbonate (PC), Teflon (PTFE), or a combination thereof. However, the material of the coating material may include various materials with excellent insulating properties used in the art for thin coatings, depending on choice.

In some embodiments, in FIG. 2, the pouch case 250 is illustrated as having an angular rectangular shape, but, in other embodiments, may include any shape such as a round rectangular shape, an oval shape, etc.

In one or more embodiments, the electrode assembly 210 may be accommodated in the pouch case 250 together with an electrolyte. The pouch case 250 may be bent through a folding surface 256 and sealed by an adhesive film 240 disposed along a sealing portion of the pouch case 250. The arrangement of the adhesive film 240 corresponds to the shape of the electrode assembly 210 so that, after sealing, the electrode assembly 210 may not flow in the up-and-down or front-and-back direction inside the pouch case 250. The adhesive film 240 may be attached to cover a region corresponding to the connection portion between the electrode tab 220 and the electrode lead 230. However, the position and shape of the adhesive film 240 illustrated in FIG. 2 are only examples and other positions/shapes may be used.

For example, the adhesive film 240 may be formed only on the corner portion of the pouch case 250 where the electrode lead 230 is disposed. The adhesive film 240 may be placed at the corners of a first cover 252 and a second cover 254 where the electrode leads 230 are disposed. The adhesive film 240 may be disposed on at least a portion of the folding surface 256. Even according to such an example, the adhesive film 240 may be attached to cover a region corresponding to the connection portion between the electrode tab 220 and the electrode lead 230.

In one or more embodiments, the thin plate-shaped pouch case 250 may include a first cover 252 and a second cover 254. The pouch case 250 may be sealed by bonding the circumference of the first cover 252 and the circumference of the second cover 254 to each other. A first adhesive film 242 may be disposed along the circumference of the first cover 252. In some embodiments, the first adhesive film 242 may be disposed along a portion of the circumference of the first cover 252. A second adhesive film 244 may be disposed along a portion of the circumference of the second cover 254.

In one or more embodiments, in a case where the first electrode lead 232 and the second electrode lead 234 are disposed on the same side surface of the pouch case 250, the second adhesive film 244 may be disposed only on the corresponding surface. In some embodiments, the first adhesive film 242 and the second adhesive film 244 may be disposed only on one side surface. The first adhesive film 242 or the second adhesive film 244 may be sealed together with the pouch case through the sealing process of the pouch case.

According to some embodiments of the present disclosure, by reinforcing the connection site (connection portion) between the electrode tab 220 and the electrode lead 230 with the adhesive film 240 and utilizing the adhesive film 240 to seal the secondary battery 200, the secondary battery 200 with high stability may be provided using a simple process.

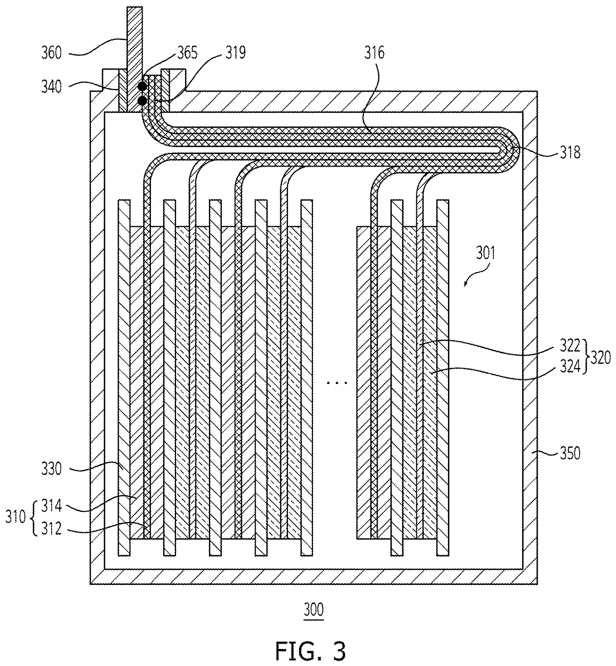

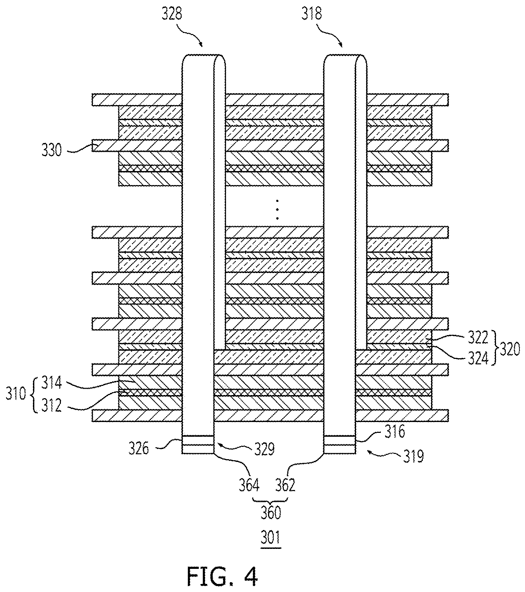

FIG. 3 illustrates a cross-sectional view in a case where the electrode assembly is seen from the side according to one or more embodiments of the present disclosure, and FIG. 4 illustrates a plan view in a case where the electrode assembly is seen from above according to one or more embodiments of the present disclosure.

Referring to FIGS. 3 and 4, a secondary battery 300 may include an electrode assembly 301 accommodated in a pouch case 350. As illustrated in FIG. 3, the electrode assembly 301 may have a multilayer structure in which a plurality of first electrodes 310, separators 330, and second electrodes 320 are stacked. For example, the electrode assembly 301 may have a structure in which the first electrode 310 and the second electrode 320 formed of a plurality of sheets are alternately stacked with the separator 330 interposed therebetween.

The first electrode 310 may include a first substrate 312 formed of a metal foil such as copper, a copper alloy, nickel, or a nickel alloy. A first active material 314, such as graphite or carbon, may be applied to the upper or lower surface of the first electrode 310, and a portion of a region where the first active material 314 is not applied may function as a first electrode tab 316. The first electrode tab 316 may be a passage for current flow between the first electrode 310 and the first electrode lead 362 formed on one side of a pouch case 350.

The second electrode 320 may include a second substrate 322 formed of a metal foil such as aluminum or an aluminum alloy. A second active material 324, such as a transition metal oxide, may be applied to the upper or lower surface of the second electrode 320, and a portion of a region where the second active material 324 is not applied may function as a second electrode tab 326. The second electrode tab 326 may be a passage for current flow between the second electrode 320 and the second electrode lead 364 formed in the pouch case 350.

In one or more embodiments, the first electrode tab 316 may include a first bent portion 318 positioned inside the pouch case 350, and the first electrode tab 316 may be bent into a U shape at the first bent portion 318. The first electrode tab 316 may refer to a set of a plurality of first substrates 312 derived from a plurality of first electrodes 310. FIGS. 3 and 4 illustrate that the first substrate 312 extends from all of the first electrodes 310 to form the first electrode tab 316, but in one or more embodiments, only the first substrates 312 of some of the plurality of first electrodes 310 may extend to form the first electrode tab 316.

In one or more embodiments, the first bent portion 318 may be positioned in an opposite direction to the first electrode lead 362. Accordingly, the first electrode tab 316 may be interposed between the electrode assembly 301 and the pouch case 350, and may perform a buffering function to prevent damage to the electrode assembly 301 from external impact.

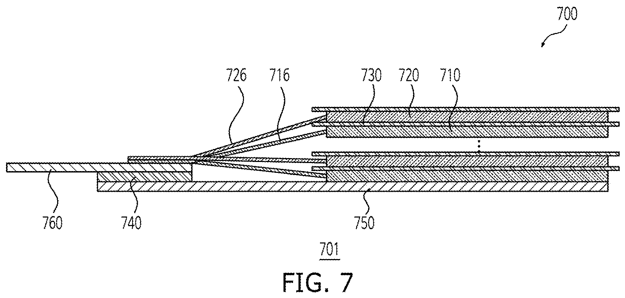

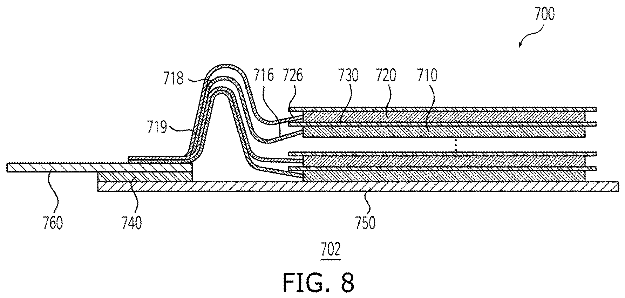

The first bent portion 318 may be formed by forming the set of the plurality of first substrates 312 to form the first electrode tab 316 and then bending the set of the plurality of first substrates 312. The method of forming the first bent portion 318 and the second bent portion 319 is described below with reference to FIGS. 7 and 8.

In one or more embodiments of the present disclosure, the first electrode tab 316 may include a second bent portion 319 positioned inside the pouch case 350, and the first electrode tab 316 may be bent into an L shape at the second bent portion 319.

The second bent portion 319 may be disposed around the connection portion 365. For example, the second bent portion 319 may be positioned inside the pouch case 350 and may connect the first electrode tab 316 to the first electrode lead 362. The first electrode tab 316 after the second bent portion 319 may be positioned horizontally with one side surface of the first electrode lead 362 so as to be tightly attached to the connection portion 365.

Similar to the first electrode tab 316, in one or more embodiments, the second electrode tab 326 may include a third bent portion 328 positioned inside the pouch case 350, and the second electrode tab 326 may be bent into a U shape at the third bent portion 328. In FIG. 3, the second electrode tab 326 is not illustrated because the second electrode tab 326 is covered by the first electrode tab 316. Accordingly, the second electrode tab 326 is described with reference to FIG. 4 together with FIG. 3.

The second electrode tab 326 may refer to a set of a plurality of second substrates 322 derived from a plurality of second electrodes 320. FIGS. 3 and 4 illustrate that the second substrate 322 extends from all of the second electrodes 320 to form the second electrode tab 326, but in one or more embodiments, only the second substrates 322 of some of the plurality of second electrodes 320 may extend to form the second electrode tab 326.

In one or more embodiments, the third bent portion 328 may be positioned in an opposite direction to the second electrode lead 364. Accordingly, the second electrode tab 326 may be interposed between the electrode assembly 301 and the pouch case 350, and may perform a buffering function to prevent damage to the electrode assembly 301 from external impact.

The third bent portion 328 may be formed by forming the set of the plurality of second substrates 322 to form the second electrode tab 326 and then bending the set of the plurality of second substrates 322. The method of forming the third bent portion 328 and the fourth bent portion 329 is described below with reference to FIGS. 7 and 8.

In one or more embodiments of the present disclosure, the second electrode tab 326 may include a fourth bent portion 329 positioned inside the pouch case 350, and the second electrode tab 326 may be bent into an L shape at the fourth bent portion 329.

The fourth bent portion 329 may be disposed around the connection portion 365. For example, the fourth bent portion 329 may be positioned inside the pouch case 350 and may connect the second electrode tab 326 to the second electrode lead 364. The second electrode tab 326 after the fourth bent portion 329 may be positioned horizontally with one side surface of the second electrode lead 364 so as to be tightly attached to the connection portion 365 of the electrode lead 360.

According to one or more embodiments, the first electrode lead 362 and the second electrode lead 364 may be disposed on the same surface of the pouch case 350. For example, the first electrode lead 362 and the second electrode lead 364 may be disposed in parallel in a state of being spaced apart from each other by a certain interval on the same surface of the pouch case 350.

According to one or more embodiments, an adhesive film 340 may be attached to opposite surfaces of the connection portion 365 to cover the connection portion 365. For example, the adhesive film 340 may be attached to opposite surfaces of the electrode lead 360 and the electrode tabs 316 and 326 constituting the connection portion 365. The adhesive film 340 may have a single long film shape, such as the shape of the adhesive film 240 illustrated in FIG. 2. The adhesive film 340 may be interposed between the first cover 252 and the second cover 254 of the pouch case 350. The first electrode lead 362 and the second electrode lead 364 may be interposed between two adhesive films 340. In some embodiments, the first electrode tab 316 and the second electrode tab 326 may be interposed between two adhesive films 340.

Thereafter, during the sealing process of the pouch case 350, the adhesive film 340 may be sealed and thus may be sealed together with the pouch case 350. The sealing process may include a heat sealing or ultrasonic sealing process described with reference to FIG. 1. Due to the adhesive force of the adhesive film 340 disposed below the connection portion 365 caused by the sealing process, the first electrode lead 362 and the first electrode tab 316 or the second electrode lead 364 and the second electrode tab 326 may be more firmly attached at the connection portion 365. In some embodiments, due to the sealing process, the connection portion 365 may not be exposed to the electrolyte or external materials used to impregnate the electrode assembly 301 in the secondary battery, so that the connection portion 365 of the electrode lead 360 may be protected from chemical corrosion or detachment caused by friction.

According to one or more embodiments of the present disclosure, one end of the electrode lead 360 may be positioned outside the pouch case 350. In some embodiments, the opposite end of the electrode lead 360 may be positioned inside the pouch case 350. The connection portion 365 may be formed on the end of the electrode lead 360 positioned inside the pouch case 350. The plane formed by the electrode lead 360 may be perpendicular to the stacking direction of the first electrode 310, the second electrode 320, and the separator 330 of the electrode assembly 301.

According to some embodiments of the present disclosure, the welding of the electrode tabs 316 and 326 and the electrode leads 360 at the bent portions 318 and 319 may be prevented, thereby reducing welding defects that may occur structurally in the secondary battery.

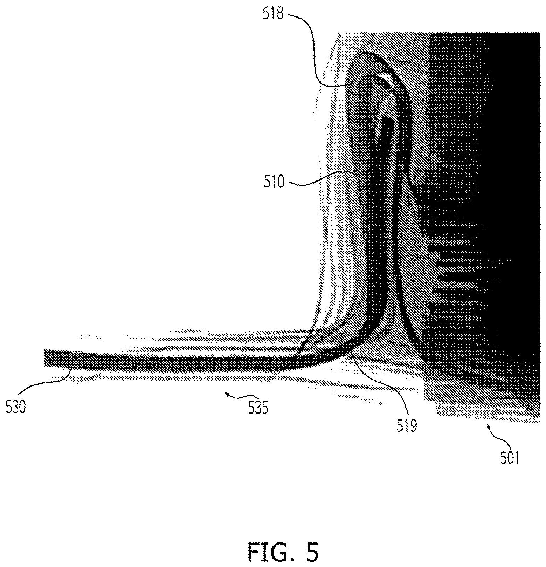

FIG. 5 illustrates a projection view of a terminal portion and surroundings thereof in the secondary battery according to one or more embodiments of the present disclosure.

Referring to FIG. 5, an electrode tab 510 may be formed to protrude from one side of an electrode assembly 501 formed by stacking a first electrode, a separator, and a second electrode. The electrode tab 510 may include a first bent portion 518 that is bent into a U shape and a second bent portion 519 that is bent into an L shape. The electrode tab 510 may be connected to the electrode lead 530 by welding or the like after coming into contact at a connection portion 535.

The other configurations are the same as described above with reference to FIGS. 1 to 4.

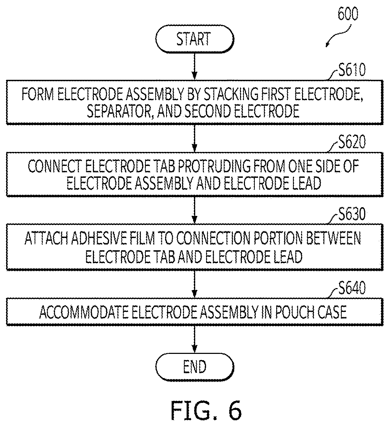

FIG. 6 illustrates a flowchart showing an example of a method for manufacturing a secondary battery according to one or more embodiments of the present disclosure.

A method 600 for manufacturing a secondary battery according to one or more embodiments of the present disclosure may be started by forming an electrode assembly by stacking a first electrode, a separator, and a second electrode (S610).

An electrode tab protruding from one side of the electrode assembly and an electrode lead may be connected to each other (S620). The operation S620 of connecting the electrode tab protruding from one side of the electrode assembly and the electrode lead according to one or more embodiments may include welding the electrode tab and the electrode lead. In one or more embodiments, one end of the electrode lead may be positioned outside a pouch case. In some embodiments, the plane formed by the electrode lead may be perpendicular to the stacking direction of the electrode assembly.

In one or more embodiments, the electrode tab may include a first electrode tab protruding from the first electrode and a second electrode tab protruding from the second electrode, and the electrode lead may include a first electrode lead connected to the first electrode tab and a second electrode lead connected to the second electrode tab. The first electrode lead and the second electrode lead may be disposed on the same surface of the pouch case.

An adhesive film may be attached to a connection portion between the electrode tab and the electrode lead (S630). For example, the adhesive film may be attached to opposite surfaces of the connection portion, and the adhesive film may be disposed along a sealing portion of the pouch case. In some embodiments, the adhesive film may include PP.

The electrode assembly may be accommodated in the pouch case (S640).

The method 600 for manufacturing a secondary battery according to one or more embodiments of the present disclosure may further include sealing the pouch case. According to one or more embodiments of the present disclosure, the operation of sealing the pouch case may include sealing the pouch case by providing the adhesive film between the first cover and the second cover of the pouch case.

The operation S620 of connecting the electrode tab protruding from one side of the electrode assembly and the electrode lead according to one or more embodiments of the present disclosure may include welding the electrode tab and the electrode lead.

The method 600 for manufacturing a secondary battery according to one or more embodiments of the present disclosure may further include forming a first bent portion positioned inside the pouch case by bending the electrode tab into a U shape. In some embodiments, the method 600 for manufacturing a secondary battery according to one or more embodiments of the present disclosure may further include forming a second bent portion positioned inside the pouch case by bending the electrode tab into an L shape. The second bent portion may be disposed below the connection portion. The manufacturing method related to the bent portion is described below with reference to FIGS. 7 and 8.

FIGS. 7 and 8 illustrate the operation of bending an electrode tab in a method for manufacturing a secondary battery according to one or more embodiments of the present disclosure.

Referring to FIG. 7, in an operation 701 before bending electrode tabs 716 and 726, an electrode assembly 700 may be formed by sequentially stacking a first electrode 710, a separator 730, and a second electrode 720. For example, the electrode assembly 700 may have a multilayer structure in which the first electrode 710 and the second electrode 720 formed of a plurality of sheets are alternately stacked with the separator 730 provided therebetween.

An adhesive film 740 may be disposed on one side surface of a pouch case 750. For example, the adhesive film 740 may be disposed along a sealing portion of the pouch case 750. In some embodiments, an electrode lead 760 may be disposed on the adhesive film 740. Although one electrode lead 760 is illustrated in FIGS. 7 and 8, the electrode lead 760 may include a first electrode lead electrically connected to the first electrode 710 and a second electrode lead electrically connected to the second electrode 720. One end of the electrode lead 760 may be positioned outside the secondary battery, beyond the tip of the pouch case 750. In some embodiments, the plane formed by the electrode lead 760 may be perpendicular to the stacking direction of the first electrode 710, the separator 730, and the second electrode 720 of the electrode assembly 700.

The first electrode tab 716 formed by extending a first current collector (or a first substrate) from one side surface of each of a plurality of first electrodes 710 may be connected to one side surface of a first electrode lead among the electrode leads 760. Similarly, the second electrode tab 726 formed by extending a second current collector (or a second substrate) from one side surface of each of a plurality of second electrodes 720 may be connected to one side surface of a second electrode lead among the electrode leads 760. The first electrode lead and the second electrode lead are spaced apart from each other and are not electrically connected.

Referring to FIG. 8, the electrode assembly 700 may be moved toward the electrode lead 760 so as to bend the electrode tabs 716 and 726 (702). As the electrode assembly 700 is moved toward the electrode lead 760, the first electrode tab 716 may form a first bent portion 718 having a U shape and a second bent portion 719 having an L shape.

In one or more embodiments, the operation of moving the electrode assembly 700 to form the first bent portion 718 and the second bent portion 719 may be performed after connecting the electrode leads 760 and the electrode tabs 716 and 726. For example, the electrode tabs 716 and 726 and the electrode leads 760 may be connected by welding after coming into parallel contact. In some embodiments, after moving the electrode assembly 700 to form the first bent portion 718 and the second bent portion 719, a heat sealing or ultrasonic sealing process may be performed on the adhesive film to seal the pouch case 750.

The other configurations are the same as described above with reference to FIGS. 1 to 6.

Secondary batteries are used in various environments due to excellent electrical characteristics thereof. However, in the case of existing pouch batteries, the exterior is made of a thin film to increase energy density, and thus, there is a limitation that it is easily deformed and ruptured in a case of being applied to physical impact thereto. In addition, as the electrode density of secondary batteries increases, the number of electrode tabs increases and the contact failure rate of electrodes increases accordingly.

In particular, design defects may frequently occur in configurations where the electrode tabs and electrode leads are welded together to connect the electrode assembly to the exterior of the pouch battery.

According to some embodiments of the present disclosure, the welding of the electrode tab and the electrode lead at the bent portion may be prevented, thereby reducing welding defects that may occur structurally in the secondary battery.

According to some embodiments of the present disclosure, a secondary battery having a novel structure may be provided which has a low failure rate in a case of being connected to an electrode lead even for a secondary battery having a plurality of electrode tabs.

According to some embodiments of the present disclosure, by reinforcing the connection site (connection portion) between the electrode tab and the electrode lead with the adhesive film while simultaneously sealing the secondary battery, the secondary battery having high stability may be provided using a small number of processes.

Although the present disclosure has been described above with respect to embodiments thereof, the present disclosure is not limited thereto.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated.

## Claims

1. A secondary battery (100), comprising:
an electrode assembly (110) comprising a first electrode, a separator, and a second electrode stacked therein;
an electrode tab (120) protruding from one side of the electrode assembly (110);
an electrode lead (130) connected to the electrode tab (120); and
a pouch case (150) accommodating the electrode assembly (110), the pouch case (150) including a first cover and a second cover, wherein:
an adhesive film (140) is attached to a connection portion (135) between the electrode tab (120) and the electrode lead (130), and
the adhesive film (140) is interposed between the first cover and the second cover.

2. The secondary battery (100) as claimed in claim 1, wherein the adhesive film (140) is along a sealing portion of the pouch case (150).

3. The secondary battery (100) as claimed in any one of the preceding claims, wherein:
the electrode tab (120) comprises a first bent portion positioned inside the pouch case (150), and
the electrode tab (120) is bent into a U shape in the first bent portion.

4. The secondary battery (100) as claimed in any one of the preceding claims, wherein:
the electrode tab (120) comprises a second bent portion positioned inside the pouch case (150), and
the electrode tab (120) is bent into an L shape in the second bent portion.

5. The secondary battery (100) as claimed in claim 4, wherein the second bent portion is below the connection portion (135).

6. The secondary battery (100) as claimed in any one of the preceding claims, wherein the adhesive film (140) is attached to opposite side surfaces of the connection portion (135).

7. The secondary battery (100) as claimed in any one of the preceding claims, wherein the adhesive film (140) comprises polypropylene, PP.

8. The secondary battery (100) as claimed in any one of the preceding claims, wherein the electrode tab (120) and the electrode lead (130) are welded together.

9. The secondary battery (100) as claimed in any one of the preceding claims, wherein one end of the electrode lead (130) is positioned outside the pouch case (150).

10. The secondary battery (100) as claimed in any one of the preceding claims, wherein a plane defined by the electrode lead (130) is perpendicular to a stacking direction of the electrode assembly (110).

11. The secondary battery (100) as claimed in any one of the preceding claims, wherein the electrode tab (120) comprises:
a first electrode tab (222) protruding from the first electrode; and
a second electrode tab (224) protruding from the second electrode,
wherein the electrode lead (130) comprises a first electrode lead (232) connected to the first electrode tab and a second electrode lead (234) connected to the second electrode tab.

12. The secondary battery (100) as claimed in claim 11, wherein the first electrode lead and the second electrode lead are on a same surface of the pouch case (150).

13. A method for manufacturing a secondary battery, the method comprising:
forming (S610) an electrode assembly by stacking a first electrode, a separator, and a second electrode;
connecting (S620) an electrode tab protruding from one side of the electrode assembly and an electrode lead;
attaching (S630) an adhesive film to a connection portion between the electrode tab and the electrode lead; and
accommodating (S640) the electrode assembly in a pouch case, the pouch case including a first cover and a second cover, the adhesive film being between the first cover and the second cover.
